# EUROPÄISCHE PATENTSCHRIFT

(11) **EP 2 085 426 B1**
(45) Veröffentlichungstag und Bekanntmachung des Hinweises auf die Patenterteilung: **13.10.2010**
(21) Anmeldenummer: 08150842.6
(22) Anmeldetag: 30.01.2008
(51) Int. Cl.: C08L 63/00, C09J 163/00

(54) **Auswaschbeständige hitzehärtende Epoxidharzklebstoffe**
Wash-resistant thermo hardening epoxy resin adhesives
Colles en résine époxy durcissant à la chaleur et résistantes au lavage

(43) Veröffentlichungstag der Anmeldung: 05.08.2009
(73) Patentinhaber: Sika Technology AG, 6340 Baar (CH)
(72) Erfinder: Hofstetter, David, 8405, Winterthur (CH); Winteler, Johann Ulrich, 6340, Baar (CH)
(74) Vertreter: Sika Patent Attorneys

(56) Entgegenhaltungen:
- EP-A- 1 498 441
- WO-A-01/94492
- US-A1- 2005 143 496

## Beschreibung

### Technisches Gebiet

Die vorliegende Erfindung betrifft das Gebiet der hitzehärtenden Epoxidharz-Rohbauklebstoffe.

### Stand der Technik

Hitzehärtenden Epoxidharzklebstoffe werden schon seit langem im als Klebstoffe für den Rohbau von Transportmittel eingesetzt. Nach der Applikation dieser Klebstoffe und dem Fügen werden die gefügten Teile lackiert. Um den Lackierungsprozess zu optimieren, werden diese Teile vor dem Lackieren mittels Waschflüssigkeit gereinigt. Um diesen Reinigungsprozess zu überstehen und im darauf folgenden KTL-Prozess (KTL = Kathodische Lauchlackierung) nicht zu Verunreinigungen und Kontaminationen zu führen, muss der verwendete Klebstoff möglichst "auswaschbeständig" sein.

Die bisherigen derartigen Klebstoffe sind bei der Applikation bei Raumtemperatur sehr hochviskos und werden deshalb vorwiegend bei hohen Temperaturen appliziert. Dies ist jedoch ein grosser Nachteil besonders dann, wenn die Applikation als Spritzapplikation erfolgen soll.

Weiterhin kommen Epoxidharze als Rohbauklebstoffe zum Einsatz, welche Polyvinylbutyrale oder Core-Shell-Polymere aufweisen. Diese Klebstoffe zeigen jedoch nach kurzzeitiger Erhitzung auf eine Temperatur von 100 -130 °C eine geringe Auswaschbeständigkeit bei einer Temperatur von ca. 60°C. Zudem ist die notwendige Menge an Polyvinylbutyralen oder Core-Shell-Polymeren sehr hoch, was zu Schwierigkeiten bei der Applikation, bzw. zu Lagerstabilitätsproblemen, führt.

### Darstellung der Erfindung

Aufgabe der vorliegenden Erfindung ist es daher, hitzehärtende Epoxidharzzusammensetzungen zur Verfügung zu stellen, welche bei Raumtemperatur gut applizierbar sind, und nach kurzzeitiger Erhitzung auf eine Temperatur von 100°C bis 130°C auch bei höheren Temperaturen, d.h. zwischen 20 und 100°C, insbesondere zwischen 40 und 70°C, bevorzugt zwischen 50 und 70°C, auswaschbeständig sind.

Überraschenderweise wurde gefunden, dass eine einkomponentige hitzehärtende Epoxidharzzusammensetzung gemäss Anspruch 1 diese Aufgabe zu lösen vermag.

Weitere Aspekte bilden ein Verfahren zur Verklebung gemäss Anspruch 11 sowie Verwendungen gemäss Anspruch 13 und 15 und ein verklebter Artikel gemäss Anspruch 14. Weitere

Bevorzugte Ausführungsformen der Erfindung sind Gegenstand der Unteransprüche.

### Wege zur Ausführung der Erfindung

Die vorliegende Erfindung betrifft in einem ersten Aspekt einkomponentige hitzehärtende Epoxidharzzusammensetzungen, welche
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein Amid **AM** mit einem Schmelzpunkt von 100°C bis 145°C, wobei das Amid **AM** ein Fettsäureamid oder ein Polyamid ist; enthalten.

Die Epoxidharzzusammensetzungen enthält mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Partikel zerkleinern.

Bevorzugte Epoxid-Festharze weisen die Formel (A-I) auf

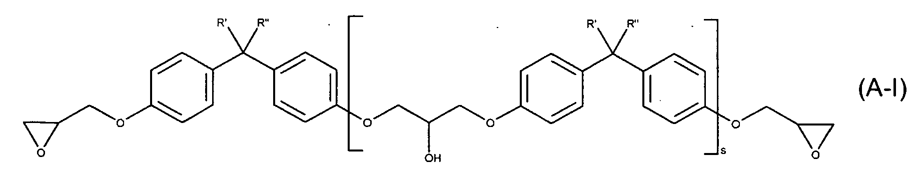

Hierbei stehen die Substituenten R' und R" unabhängig voneinander entweder für H oder CH₃. Der Term "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (A-I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (A-II) auf

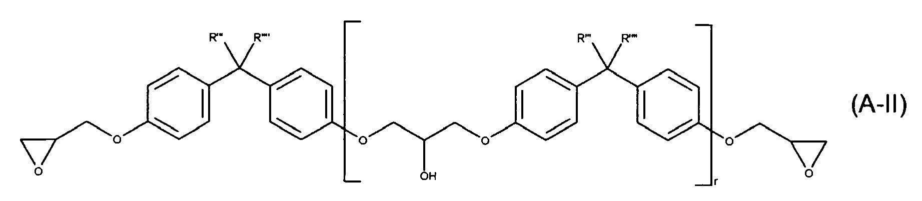

Hierbei stehen die Substituenten R"' und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman, bzw. Hexion) oder D.E.R.™ 331 oder D.E.R.™ 330 (Dow) oder Epikote 828 (Hexion) erhältlich.

Bevorzugt stellt das Epoxidharz **A** ein Epoxid-Flüssigharz der Formel (A-II) dar. In einer noch mehr bevorzugten Ausführungsform enthält die hitzehärtende Epoxidharzzusammensetzung sowohl mindestens ein Epoxid-Flüssigharz der Formel (A-II) als auch mindestens ein Epoxid-Festharz der Formel (A-I).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Die hitzehärtende Epoxidharzzusammensetzung enthält mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

Besonders bevorzugt als Härter **B** ist Dicyandiamid.

Die Menge des Härters **B** für Epoxidharze, welcher durch erhöhte Temperatur aktiviert wird, beträgt vorteilhaft 0.1 - 30 Gew.-%, insbesondere 0.2 - 10 Gew.-%, bezogen auf das Gewicht des Epoxidharzes **A.**

Die hitzehärtende Epoxidharzzusammensetzung enthält mindestens ein Amid **AM** mit einem Schmelzpunkt von 100°C bis 145°C. Dieses Amid **AM** ist ein Fettsäureamid oder ein Polyamid.

Die Vorsilbe "Poly", die in der vorliegenden Erfindung für Substanzbezeichnungen wie beispielsweise "Polyamid", "Polyol"", "Polyamin", "Polyphenol oder "Polyisocyanat" bezeichnet im vorliegenden Dokument Substanzen, die formal zwei oder mehr der in ihrem Namen vorkommenden funktionellen Gruppen pro Molekül enthalten.

Das Amid **AM** einen Schmelzpunkt weist vorzugsweise von 120°C bis 130 °C auf.

In einer Ausführungsform ist das Amid **AM** ein Fettsäureamid. Als Fettsäureamid gelten insbesondere Fettamine der Formel (II).

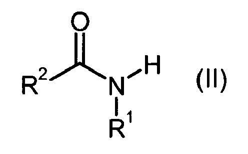

Hierbei steht R¹ für H oder eine C₁-C₄-Alkylgruppe oder eine Benzylgruppe und R² steht für eine gesättigte oder ungesättigte C₈-C₂₂-Alkylgruppe.

Besonders handelt es sich beim Amid der Formel (II) um ein Amid, welches ausgewählt ist aus der Gruppe bestehend aus Lauryl-, Myristin-, Palmitin-, Stearin- und Linolensäureamid.

In einer weiteren Ausführungsform ist das Amid **AM** ein Polyamid. Besonders bevorzugt ist das Polyamid ein Polyamid-Wachs.

Besonders bevorzugte Amide **AM** sind solche Polyamide, wie sie kommerziell unter dem Handels-Reihenamen Disparlon® von der Firma Kusumoto Chemicals Ltd., Japan oder Luvotix® von der Firma Lehmann & Voss & Co, Deutschland vertrieben werden.

Es ist durchaus auch möglich, dass Mischungen von zwei oder mehren Amiden **AM** in der Zusammensetzung verwendet werden.

Vorteilhaft ist der Gewichtsanteil aller Amide **AM** in der Zusammensetzung 0.1 - 5.0 Gew.-%, insbesondere 0.2 - 4.0 Gew.-%, bevorzugt 0.5 - 3.0 Gew.-%.

Vorteilhaft enthält die hitzehärtende Epoxidharzzusammensetzung mindestens einen Zähigkeitsverbesserer **D.**

Unter einem "Zähigkeitsverbesserer" wird in diesem Dokument ein Zusatz zu einer Epoxidharzmatrix verstanden, der bereits bei geringen Zuschlägen von 0.1 - 50 Gew.-%, insbesondere von 0.5 - 40 Gew.-%, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Der Zähigkeitsverbesserer **D** kann ein fester oder ein flüssiger Zähigkeitsverbesserer sein.

Feste Zähigkeitsverbesserer sind in einer ersten Ausführungsform organische Ionen-getauschte Schichtmineralien. Derartige Zähigkeitsverbesserer sind beispielsweise in US 5,707,439 oder in US 6,197,849 beschrieben. Besonders geeignete derartige feste Zähigkeitsverbesserer sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garamite® (Southern Clay Products) erhältlich.

Feste Zähigkeitsverbesserer sind in einer zweiten Ausführungsform Blockcopolymere. Das Blockcopolymer wird beispielsweise erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Feste Zähigkeitsverbesserer sind in einer dritten Ausführungsform Core-Shell Polymere. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength^{™} von Atofina, Paraloid^{™} von Rohm and Haas oder F-351^{™} von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur^{™} von Nanoresins AG, Deutschland, angeboten.

Feste Zähigkeitsverbesserer sind in einer vierten Ausführungsform feste Umsetzungsprodukte eines carboxylierten festen Nitrilkautschuks mit überschüssigem Epoxidharz.

Flüssige Zähigkeitsverbesserer sind bevorzugt Flüssigkautschuke oder flüssige Zähigkeitsverbesserer basierend auf einem Polyurethanpolymer.

In einer ersten Ausführungsform ist der Flüssigkautschuk ein Acrylonitil/Butadien-Copolymer, welches mit Carboxylgruppen oder (Meth)acrylatgruppen oder Epoxidgruppen terminiert ist, oder ein Derivat davon ist.

Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC, kommerziell erhältlich. Als Derivate sind insbesondere Epoxidgruppen aufweisende Elastomer-modifizierte Polymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer zweiten Ausführungsform ist dieser Flüssigkautschuk ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer dritten Ausführungsform ist dieser Flüssigkautschuk ein Polyetheramid, welches mit Carboxylgruppen oder Epoxidgruppen terminiert ist. Derartige Polyamide sind insbesondere hergestellt aus der Umsetzung von aminoterminierten Polyethylenether oder Polypropylenether, wie sie zum Beispiel unter dem Namen Jeffamine® von Huntsman, bzw. Hexion, vertrieben werden, mit Dicarbonsäureanhydrid nachfolgender Reaktion mit Epoxidharzen, wie sie zum im Beispiel 15 in Verbindung mit Beispiel 13 von DE 2123033 beschrieben sind. Anstelle von Dicarbonsäureanhydrid können auch Hydroxybenzoesäure oder Hydroxybenzoate verwendet werden.

Es ist dem Fachmann klar, dass natürlich auch Mischungen von Flüssigkautschuken verwendet werden können, insbesondere Mischungen von carboxyl- oder epoxidterminierten Acrylnitril/Butadien-Copolymeren oder von Derivaten davon.

Bevorzugt ist der Zähigkeitsverbesserer **D** ausgewählt aus der Gruppe bestehend aus blockierten Polyurethanpolymeren, Flüssigkautschuken, Epoxidharz-modifizierten Flüssigkautschuken und Core-Shell-Polymeren.

In einer bevorzugten Ausführungsform ist der Zähigkeitsverbesserer **D** ein blockiertes Polyurethanpolymer der Formel (I).

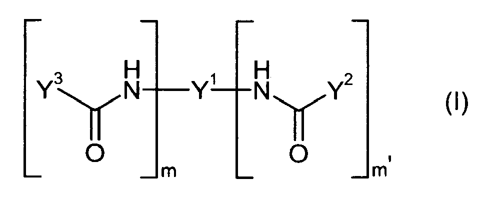

Hierbei stehen m und m' je für Werte zwischen 0 und 8, mit der Massgabe, dass m +m' für einen Wert von 2 bis 8 steht.

Weiterhin steht Y¹ für ein mit m+m' Isocyanatgruppen terminiertes lineares oder verzweigtes Polyurethanpolymer **PU1** nach dem Entfernen aller endständigen Isocyanatgruppen.

Y² steht unabhängig von einander für eine Blockierungsgruppe, welche sich bei einer Temperatur über 100°C abspaltet.

Y³ steht unabhängig von einander für eine Gruppe der Formel (I').

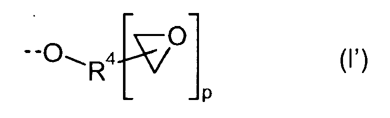

Hierbei steht R⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und p steht für die Werte 1, 2 oder 3.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Y² steht insbesondere unabhängig voneinander für einen Substituenten, welcher ausgewählt ist aus der Gruppe bestehend aus

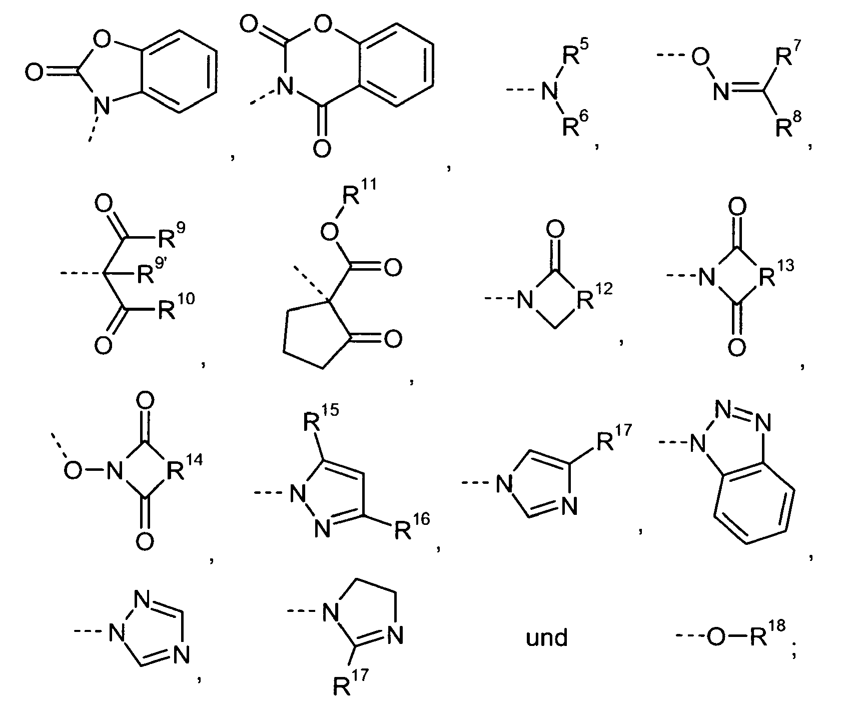

Hierbei stehen R⁵, R⁶, R⁷ und R⁸ je unabhängig voneinander für eine Alkyl- oder Cycloalkyl- oder Aralkyl- oder Arylalkyl-Gruppe oder-aber R⁵ bildet zusammen mit R⁶, oder R⁷ zusammen mit R⁸, einen Teil eines 4- bis 7-gliedrigen Rings, welcher allenfalls substituiert ist.

Weiterhin steht R⁹, R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R¹⁵, R¹⁶ und R¹⁷ stehen je unabhängig voneinander für H oder für eine Alkylgruppe oder für eine Arylgruppe oder eine Aralkylgruppe.

Schliesslich steht R¹⁸ für eine Aralkylgruppe oder für eine ein- oder mehrkernige substituierte oder unsubstituierte Aromatengruppe, welche gegebenenfalls aromatische Hydroxylgruppen aufweist.

Die gestrichelten Linien in den Formeln dieses Dokumentes stellen jeweils die Bindung zwischen dem jeweiligen Substituenten und dem dazugehörigen Molekülrest dar.

Als R¹⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Besonders bevorzugte Reste Y² sind Reste, welche ausgewählt sind aus der Gruppe bestehend aus

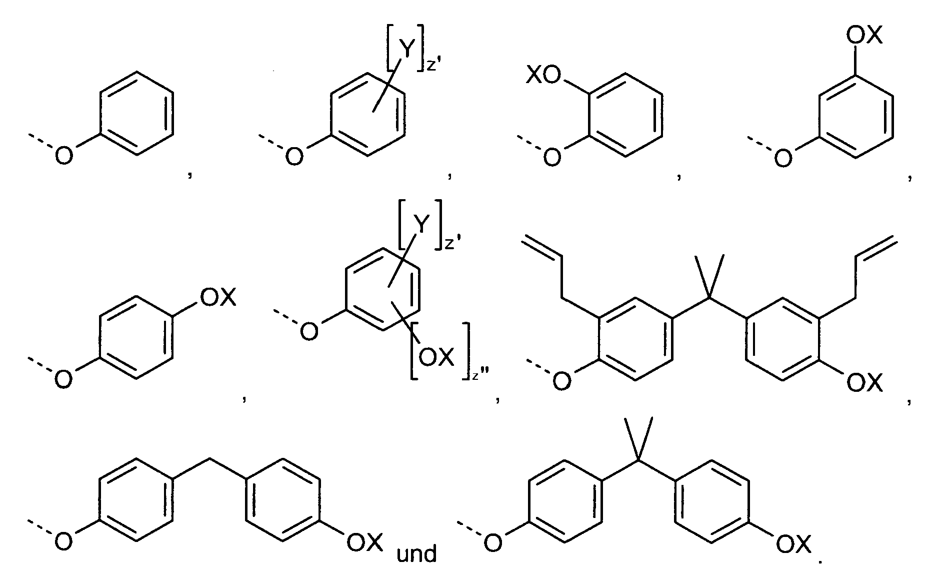

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Der Rest X steht für H oder für einen Alkyl-, Aryl-, Aralkylgruppe, insbesondere für H oder Methyl.

Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (I) erfolgt aus dem Isocyanatgruppen terminierten linearen oder verzweigten Polyurethanpolymeren **PU1** mit einer oder mehreren Isocyanat-reaktiven Verbindungen Y²H und oder Y³H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen Y²H und/oder Y³H stöchiometrisch oder im stöchiometrischen Überschuss eingesetzt werden, um zu gewährleisten, dass alle NCO-Gruppen umgesetzt sind.

Die Isocyanat-reaktive Verbindung Y³H ist eine Monohydroxyl-Epoxidverbindung der Formel (IIIa).

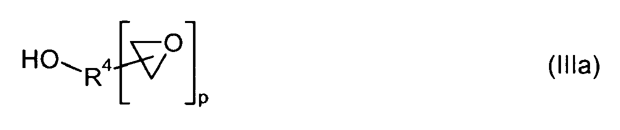

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (IIIa) weist 1, 2 oder 3 Epoxidgruppen auf. Die Hydroxylgruppe dieser Monohydroxyl-Epoxidverbindung (IIIa) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IIIb), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IIIb), die bei der Reaktion von Bisphenol-F (R = H) oder des Gemisches von Bisphenol-A und Bisphenol-F mit Epichlorhydrin gebildet werden.

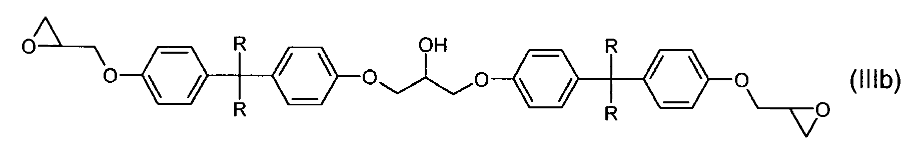

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist insbesondere bevorzugt ein dreiwertiger Rest der Formel 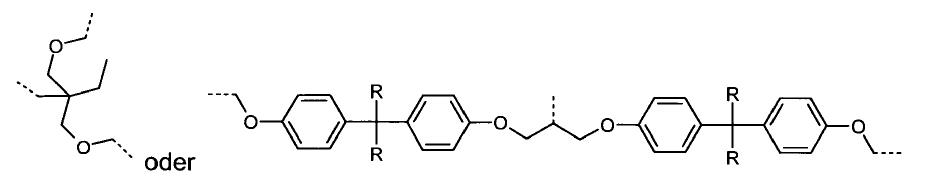 wobei R für Methyl oder H steht.

Die freie primäre oder sekundäre OH-Funktionalität der Monohydroxyl-Epoxidverbindung der Formel (IIIa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem Y¹ basiert, lässt sich aus mindestens einem Diisocyanat oder Triisocyanat sowie aus mindestens einem Polymeren **Q_{PM}** mit endständigen Amino-, Thiol- oder Hydroxylgruppen und / oder aus einem, gegebenenfalls substituierten, Polyphenol **Q_{PP}** herstellen.

Geeignete Diisocyanate sind beispielsweise aliphatische, cycloaliphatische, aromatische oder araliphatische Diisocyanate, insbesondere handelsübliche Produkte wie Methylendiphenyldiisocyanat (MDI), 1,4-Butandiisocyanat, Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI) oder m-Tetramethylxylylen diisocyanat (TMXDI) sowie deren Dimere. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere Polymere **Q_{PM}** mit zwei oder drei endständigen Amino-, Thiol- oder Hydroxylgruppen geeignet.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, Oxetan, 1,2-oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und - triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hypro™(früher Hycar®) CTBN und CTBNX und ETBN von Nanoresins AG, Deutschland, bzw. Emerald Performance Materials LLC, und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentsgewichten von 300 bis 6'000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Im Weiteren können als Polymere **Q_{PM}** auch di- oder höherfunktionelle aminoterminierte Polyethylenether, Polypropylenether, wie sie zum Beispiel unter dem Namen Jeffamine® von Huntsman, bzw. Hexion, vertrieben werden, Polybutylenether, Polybutadiene, Butadien/Acrylnitril-Copolymere, wie sie zum Beispiel die unter dem Namen Hypro™(früher Hycar®) ATBN von Nanoresins AG, Deutschland, bzw. Emerald Performance Materials LLC, vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (A) oder (B) 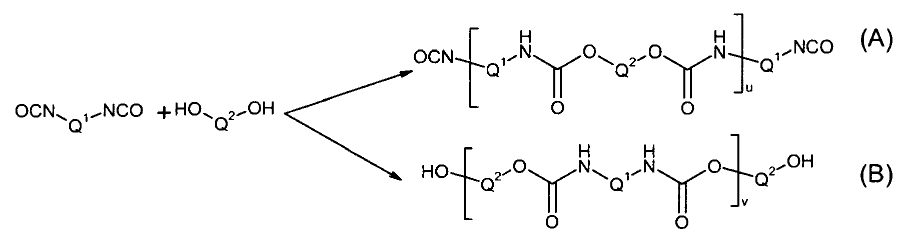 Die Reste Q¹ und Q² stellen einen divalenten organischen Rest dar und die Indizes u und v variieren je nach Stöchiometrieverhältnis von 1 bis typischerweise 5.

Diese Spezies der Formel (A) oder (B) können dann wiederum weiterreagiert werden. So kann beispielsweise aus der Spezies der Formel (A) und einem Diol mit einem divalenten organischen Rest Q³ ein kettenverlängertes Polyurethanpolymer **PU1** der folgenden Formel gebildet werden:

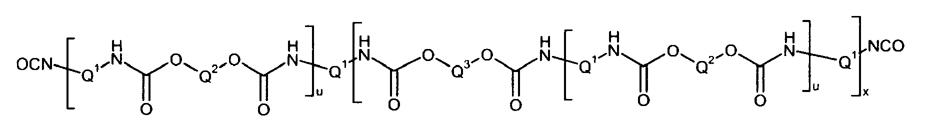

Aus der Spezies der Formel (B) und einem Diisocyanat mit einem divalenten organischen Rest Q⁴ kann ein kettenverlängertes Polyurethanpolymer **PU1** der folgenden Formel gebildet werden:

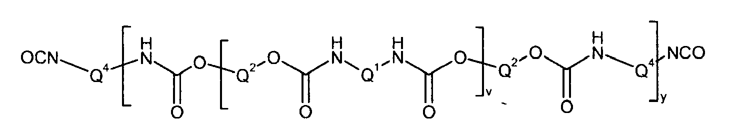

Die Indizes x und y variieren je nach Stöchiometrieverhältnis von 1 bis typischerweise 5, und sind insbesondere 1 oder 2.

Weiterhin kann auch die Spezies der Formel (A) mit der Spezies der Formel (B) umgesetzt werden, so dass ein NCO Gruppen aufweisendes kettenverlängertes Polyurethanpolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanpolymeren **PU1** generell und bei den kettenverlängerten Polyurethanpolymeren im Speziellen ist vorteilhaft darauf zu achten, dass die Polymere nicht zu hohe Viskositäten aufweisen, insbesondere wenn höher funktionelle Verbindungen für die Kettenverlängerung eingesetzt werden, denn dies kann deren Umsetzung zu den Polymeren der Formel (I), beziehungsweise die Applikation der Zusammensetzung, erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanpolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

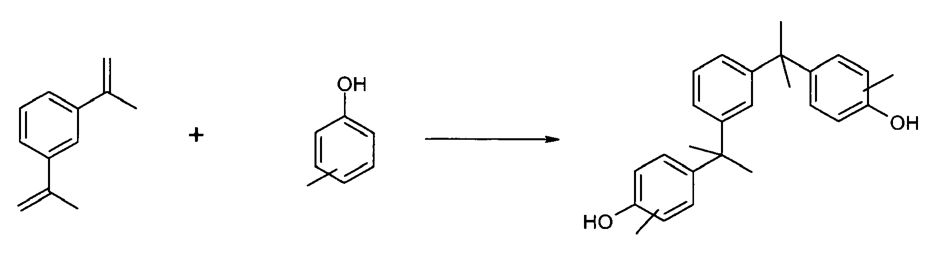

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das **Q_{PP}** 2 oder 3 phenolische Gruppen auf.

In einer ersten Ausführungsform wird das Polyurethanpolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanpolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanpolymer **PU1** aus mindestens einem Diisocyanat oder Triisocyanat sowie aus einem, gegebenenfalls substituierten, Polyphenol **Q_{PP}** hergestellt. Die Herstellung des Polyurethanpolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanpolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanpolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss und anschliessend mit mindestens einem Polymeren **Q_{PM}** in Unterschuss umgesetzt.

Im dritten Verfahren schliesslich, "2-Schrittverfahren II" genannt, wird mindestens ein Polymer **Q_{PM}** mit mindestens einem Diisocyanat oder Triisocyanat in einem Isocyanatüberschuss und anschliessend mit mindestens einem Polyphenol **Q_{PP}** in Unterschuss umgesetzt.

Die drei Verfahren führen zu Isocyanat-terminierten Polyurethanpolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanpolymeren **PU1** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer **Q_{PM})** bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM},** das Polyphenol **Q_{PP},** das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanpolymer **PU1** weist bevorzugt elastischen Charakter auf und zeigt eine Glasumwandlungstemperatur Tg von kleiner als 0°C.

Das endständig blockierte Polyurethanpolymer der Formel (I) weist vorteilhaft einen elastischen Charakter auf und ist weiterhin vorteilhaft in Epoxid-Flüssigharzen löslich oder dispergierbar.

Besonders bevorzugt ist der Formel (I) m verschieden von 0.

Besonders bevorzugt werden gleichzeitig mehrere Zähigkeitsverbesserer **D** als Bestandteil der hitzehärtenden Epoxidharzzusammensetzung. Besonderes bevorzugt enthält die hitzehärtende Epoxidharzzusammensetzung mindestens ein blockiertes Polyurethanpolymer der Formel (I) sowie mindestens ein Core-Shell-Polymer und/oder mit ein Carboxyl- oder (Meth)acrylat-oder Epoxid-Gruppen terminiertes Acrylnitril/Butadien-Copolymer oder ein Derivat davon.

Der Anteil des Zähigkeitsverbesserers **D** beträgt vorteilhaft 0.1 - 50 Gew.-%, insbesondere 0.5 - 30 Gew.-%, am Gewicht der Zusammensetzung.

Weiterhin ist bevorzugt, wenn die einkomponentige hitzehärtende Epoxidharzzusammensetzung zusätzlich mindestens einen Füllstoff **F** enthält. Bevorzugt handelt es sich hierbei um Russ, Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 2 - 50 Gewichts-%, vorzugsweise 3 - 35 Gewichts-%, insbesondere 5 - 25 Gewichts-%, bezogen auf das Gewicht der gesamten Zusammensetzung.

In einer weiteren Ausführungsform enthält die Zusammensetzung ein chemisches Treibmittel **H,** wie es beispielsweise unter dem Handelsnamen Expancel^{™} der Firma Akzo Nobel oder Celogen^{™} der Firma Chemtura oder Luvopor^{™} der Firma Lehmann & Voss, Deutschland, erhältlich ist. Der Anteil eines derartigen Treibmittels **H** beträgt vorteilhaft 0.1 - 3 Gew.-%, bezogen auf das Gewicht der Zusammensetzung.

Vorteilhaft enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 0.5 - 8 Gewichts-%, bezogen auf das Gewicht der gesamten Zusammensetzung.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Farbstoffe und Pigmente, umfassen.

Die einkomponentige hitzehärtende Epoxidharzzusammensetzung weist bei 25°C vorzugsweise eine Viskosität von weniger als 1000 Pas, insbesondere zwischen 5 und 900 Pas, bevorzugt zwischen 150 und 800 Pas, auf, so dass sich die Zusammensetzung bei Raumtemperatur leicht applizieren lässt. Die in diesem Dokument angegebenen Viskositäten wurden auf einem Rheometer (CVO 120 HR, Firma Bohlin) mittels oszillographischen Messung (Spalt: 1000 µm, Platte/Platte, Plattendurchmesser: 25 mm, Frequenz: 5 Hz, Solldeformation: 0.01) in einem Temperaturbereich von 23 - 70°C (Aufheizrate: 10°C/min) gemessen.

Es hat sich gezeigt, dass sich die erfindungsgemässen hitzehärtenden Epoxidharzzusammensetzungen besonders als einkomponentige Klebstoffe verwendet werden können.

Somit betrifft die Erfindung in einem weiteren Aspekt eine Verwendung der vorgängig beschriebenen einkomponentigen hitzehärtenden Epoxidharzzusammensetzung als einkomponentigen hitzehärtenden Klebstoff, insbesondere als hitzehärtender einkomponentiger Rohbauklebstoff im Fahrzeugbau. Insbesondere hat sich gezeigt, dass die hitzehärtenden Epoxidharzzusammensetzungen nach einer Erhitzung auf eine Temperatur von 100 bis 130°C, insbesondere von 115 bis 125 °C, eine sehr gute Auswaschbeständigkeit aufweisen.

Besonders unter Verwendung von Zähigkeitsmodifikatoren **D,** wie sie vorgängig im Detail beschrieben wurden, sind Klebstoffe realisierbar, welche sich nach Aushärtung durch eine hohe Schlagzähigkeit auszeichnen. Solche Klebstoffe werden für das Verkleben von hitzestabilen Materialien benötigt. Unter hitzestabilen Materialien werden Materialien verstanden, welche bei einer Aushärtetemperatur von 140 - 220 °C, vorzugsweise 140 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten, und durch KTL (Kathodische Tauchlackierung) beschichtete Metalle, insbesondere durch KTL beschichteter Stahl.

Ein weiterer Aspekt der Erfindung betrifft somit ein Verfahren zum Verkleben von hitzestabilen Substraten, welche die folgenden Schritte aufweisen
i) Applizieren einer einkomponentigen hitzehärtenden Epoxidharzzusammensetzung, wie sie vorgängig beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen des Epoxidharzzusammensetzung auf eine Temperatur von 100 bis 130 °C, bevorzugt von 115 und 125°C;
iv) In Kontaktbringen der Substrate **S1** und **S2** und der damit in Kontakt stehenden hitzehärtenden Epoxidharzzusammensetzung mit einer Waschflüssigkeit bei einer Temperatur zwischen 20 und 100°C, insbesondere zwischen 40 und 70°C; bevorzugt zwischen 50 und 70°C
v) Erhitzen der Zusammensetzung auf eine Temperatur von 140 - 220 °C, insbesondere von 140 - 200°C, bevorzugt zwischen 160 und 190°C.

Das Substrat **S2** besteht hierbei aus dem gleichen oder einem unterschiedlichen Material wie das Substrat **S1.**

Insbesondere handelt es sich beim hitzestabilen Substrat **S1** und/oder **S2** um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten, und durch KTL beschichtete Metalle, insbesondere durch KTL beschichteter Stahl.

Somit wird bevorzugt, dass ist das Substrat **S1** und/oder das Substrat **S2** ein Metall ist, welches vor dem Schritt i) durch eine kathodische Tauchlackierung (KTL) beschichtet worden ist.

Der Schritt iii) erfolgt typischerweise, indem das gefügte Teil, welches aus dem Schritt ii) resultiert, durch eine Durchlaufofen durchläuft, insbesondere mit Hilfe eines Förderbandes.

Schritt iv) erfolgt typischerweise durch Abspritzen mittels einer Waschflüssigkeit oder durch Eintauchen in ein Waschbad. Typischerweise erfolgt dieser Waschprozess bei einer Temperatur von 60°. Als Waschflüssigkeit dient insbesondere Wasser. Weiterhin kann die Waschflüssigkeit weitere Bestandteile insbesondere Tenside und/oder Lösungsmittel enthalten. Beim Abspritzen werden vielfach mit ziemlich hohem Druck durchgeführt. Drucke von bis zu 4 bar sind durchaus üblich.

Aus einem derartigen Verfahren zum Verkleben von hitzestabilen Materialien resultiert ein verklebter Artikel, was einen weiteren Aspekt der vorliegenden Erfindung darstellt. Ein derartiger Artikel ist vorzugsweise ein Fahrzeug oder ein Teil eines Fahrzeugs, insbesondere ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Es hat sich gezeigt, dass die Epoxidharzzusammensetzungen bei 25°C (η_{25°}) zwar eine tiefe Viskosität aufweisen, insbesondere von weniger als 1000 Pas, so dass eine Applikation bei Raumtemperatur ermöglicht wird, nach kurzer Erhitzung der applizierte Zusammensetzung auf eine Temperatur von 100 bis 130°C jedoch eine starke Erhöhung der Viskosität aufweisen. Die Dauer der kurzen Erhitzung ist typischerweise 5 bis 15 Minuten. Die Viskositätserhöhung ist derart, dass die bei 60°C gemessene Viskosität nach Erhitzung (η_{Δ, 60°}) mehr als 200 Pas ist. Vorzugsweise ist das Verhältnis der Viskositäten gemessen bei 60°C der Zusammensetzung nach (_{ηΔ, 60°}) und vor (η_{60°}) der Erhitzung auf 100 - 130°C einen Wert von η_{Δ, 60°} / η_{60°} > 6, insbesondere von > 9 ist.

Aufgrund der Tatsache, dass die bei 60°C gemessenen Viskositäten der entsprechenden Zusammensetzungen ohne das Amin **AM** keine oder lediglich geringe Zunahme durch die Erhitzung auf 100 - 130°C erfahren, d.h. ein Verhältnis η_{Δ, 60°} / η_{60°} von < 4, insbesondere von < 3 aufweisen, zeigt, dass durch die kurze Erhitzung die Epoxidgruppen noch nicht, bzw. fast nicht, vernetzt vorliegen. Die Tatsache, dass bei den erfindungsgemässen Zusammensetzungen diese gewünschte Viskositätserhöhung, welche zu einer verbesserten Auswaschbeständigkeit führt, ist völlig überraschend.

Weiterhin ist die sogenannte Fliessgrenze, gemessen bei 60°C, dieser Zusammensetzungen nach kurzer Erhitzung auf 100 - 130°C vorzugsweise mehr als 40, insbesondere mehr als 50, Pa.

Die in diesem Dokument angegebenen Fliessgrenzen wurden mit Hilfe eines Rheometers (CVO 120 HR, Firma Bohlin) durch isotherme Messung bei 60°C nach Vorscherung (Platte/Platte, Spalt: 1000 µm, Plattendurchmesser: 25 mm, Scherrate 10 s⁻¹, 30 s) ermittelt. Als Fliessgrenze wird bei diejenige Schubspannung bezeichnet, bei welcher die gemessene Viskosität den Schwellenwert von 500'000 Pas überschreitet, indem die angelegte Schubspannung von 1000 auf 10 Pa stufenweise gesenkt wird (Verzögerungszeit 10 s, Integrationszeit 15 s, 30 Messpunkte logarithmisch verteilt auf der Spannungsachse).

Die niedrige Viskosität der Zusammensetzungen erlaubt einerseits eine Applikation der Zusammensetzung bei Raumtemperatur und andererseits ist die Applikation stark vereinfacht. So lassen sich die Zusammensetzungen vielfach bei Raumtemperatur durch Spritzverfahren auftragen. Ebenso denkbar sind andere Applikationsverfahren mitunter ohne Erwärmung (d.h. bei Raumtemperatur) wie Swirl-Applikation, Flat-Stream, Mini-Flat-Stream, sowie Dünnstrahlspritzen bei Geschwindigkeiten von > 200 mm/s, oder dergleichen.

Dadurch ergibt sich ein grosser Vorteil bei der Applikation, indem nämlich der Schritt des Aufheizens der Zusammensetzung vor der Applikation entfällt, was insbesondere auch zu geringeren Verschmutzung und Verstopfen der Applikationsgeräte (insbesondere Düsen oder drehende Teile) führt.

Es hat sich weiterhin gezeigt, dass die Zusammensetzungen über eine exzellente Lagerstabilität verfügen.

Völlig überraschend hat sich gezeigt, dass ein Amid **AM,** wie es vorgängig im Detail beschrieben wurde, zur Erhöhung der Auswaschbeständigkeit eines Rohbauklebstoffes im Fahrzeugbau verwendet werden kann.

### Beispiele

### Zusammensetzungen

Es wurden die folgenden Zusammensetzungen gemäss Tabelle 1 hergestellt. In Beispiel **2** wurde der Epoxidflüssigharz- und Epoxidfestharz-Anteil zugunsten eines terminierten Polyurethanpolymeren-Zähigkeitsverbesserers *D-1* reduziert, welches wie folgt hergestellt wurde:
150 g Poly-THF 2000 (BASF, OH-Zahl 57 mg/g KOH) und 150 Liquiflex H (Krahn (Hydroxylterminertes Polybutadien),OH-Zahl 46 mg/g KOH)wurden 30 Minuten unter Vakuum bei 105°C getrocknet. Nachdem die Temperatur auf 90°C reduziert worden war, wurden 61.5 g IPDI (Isophorondiisocyanat,Evonik) und 0.14 g Dibutylzinndilaurat zugegeben. Die Reaktion wurde unter Vakuum bei 90°C bis zur Konstanz des NCO-Gehaltes bei 3.10% nach 2.0h geführt (berechneter NCO-Gehalt: 3.15%). Anschliessend wurden 96.1 g Cardanol (Cardolite NC-700,Cardolite) als Blockierungsmittel zugegeben. Es wurde bei 105°C unter Vakuum weitergerührt, bis der NCO-Gehalt nach 3.5h unter 0.2% gesunken war. Das Produkt wurde so als Zähigkeitsverbesserer *D-1* verwendet.

In Beispiel ***Ref.4*** wurden 6 Gewichtsteile pyrogene Kieselsäure eingesetzt, um bei 60°C nach Erhitzung eine mit den Beispielen 1 bis 3 vergleichbare Viskosität (η_{Δ, 60°}) zu erhalten. Bei analoger Zugabe von 3 Gewichtsteilen Aerosil® (nicht in Tabelle aufgeführt) hingegen war (η_{Δ, 60°}) viel tiefer und die Fliessgrenze bei 60°C kleiner als 10 Pa.

### Prüfmethoden

### Viskosität

Die Viskositäten wurden auf einem Rheometer (CVO 120 HR, Firma Bohlin) mittels oszillographischen Messung (Spalt: 1000 µm, Platte/Platte, Plattendurchmesser: 25 mm, Frequenz: 5 Hz, Solldeformation: 0.01) in einem Temperaturbereich von 23 - 70°C (Aufheizrate: 10°C/min) gemessen. Die Viskositäten vor der Erhitzung sind als η, bzw. η_{25°} , bzw. η_{60°} angegeben, die Viskositäten nach der 12 minütigen Erhitzung auf 125°C sind als η_{Δ}, bzw. η_{Δ, 25°}, bzw. η_{Δ, 60°} angegeben.

### Fliessgrenze

Die Fliessgrenzen wurden mit Hilfe eines Rheometers (CVO 120 HR, Firma Bohlin) durch isotherme Messung bei 60°C nach Vorscherung (Platte/Platte, Spalt: 1000 µm, Plattendurchmesser: 25 mm, Scherrate 10 s⁻¹, 30 s) ermittelt. Als Fliessgrenze wird bei diejenige Schubspannung bezeichnet, bei welcher die gemessene Viskosität den Schwellenwert von 500'000 Pas überschreitet, indem die angelegte Schubspannung von 1000 auf 10 Pa stufenweise gesenkt wird (Verzögerungszeit 10 s, Integrationszeit 15 s, 30 Messpunkte logarithmisch verteilt auf der Spannungsachse).

### Auswaschbeständigkeit

Zur Bestimmung der Auswaschbeständigkeit wurde die jeweilige Zusammensetzung bei Raumtemperatur als Rundraupe auf ein beöltes Blech (feuerverzinkt) appliziert. Anschliessend wurde die Probe während 12 Minuten in einem Ofen bei 125°C erhitzt und wieder auf Raumtemperatur abgekühlt. Anschliessend wurde diese Bleche in ein Drehgestell montiert, und mit einem 60°C warmen Wasserstrahl bei 3 bar Wasserdruck während 10 Minuten unter Drehung der Bleche (20 Drehungen / Minuten) abgespritzt. Als auswaschbeständig ("OK") wurden diejenigen Proben bezeichnet, bei denen die Haftung nicht oder nur schwach (weniger als 50% der Klebfläche) verloren ging. Als nicht auswaschbeständig ("n.OK") wurden diejenigen Proben bezeichnet, bei welchem die Haftung ganz oder stark verloren ging (mehr als 50% der Klebfläche).

**Tabelle 1. Zusammensetzungen und deren Ergebnisse.**

| | ***Ref.1*** | ***Ref.2*** | ***Ref.3*** | ***1*** | ***2*** | ***3*** | ***Ref.4*** |
|---|---|---|---|---|---|---|---|
| *DGEBA* [GT¹] | 64 | 64 | 64 | 64 | 56 | 64 | 64 |
| D.E:R. ™671² [GT¹] | 12 | 12 | 12 | 12 | | 12 | 12 |
| *D-1* [GT¹] | | | | | 20 | | |
| *Dicy*³ [GT¹] | 5.7 | 5.7 | 5.7 | 5.7 | 5.7 | 5.7 | 5.7 |
| Beschleuniger⁴ [GT¹] | 0.3 | 0.3 | 0.3 | 0.3 | 0.3 | 0.3 | 0.3 |
| Aerosil® R202⁵ [GT¹] | 3.0 | 3.0 | 3.0 | 3.0 | 3.0 | 3.0 | 3.0 |
| Kreide/Calciumoxid-Mix[GT¹] | 15.0 | 15.0 | 15.0 | 15.0 | 15.0 | 15.0 | 15.0 |
| Mowital® B 60 H⁶ [GT¹] | | 3 | | | | | |
| Zeon F351⁷ [GT¹] | | | 3 | | | | |
| Luvotix® HT⁸ [GT¹] | | | | 3 | 3 | | |
| Disparlon® 6200⁹ [GT¹] | | | | | | 3 | |
| Aerosil® R202⁵ [GT¹] | | | | | | | 6 |
| | | | | | | | |
| η_{25°}[Pas] | 210 | 250 | 270 | 270 | 270 | 270 | 2200 |
| η_{60°}[Pas] | 10 | 30 | 10 | 10 | 30 | 40 | 1180 |
| η_{Δ, 25°}[Pas] | 510 | 2250 | 1310 | 1790 | 3270 | 1120 | 2500 |
| η_{Δ, 60°}[Pas] | 25 | 95 | 40 | 300 | 730 | 260 | 450 |
| η_{Δ, 60°} / η_{60°} | 2.5 | 3.2 | 4.0 | 30.0 | 24.0 | 6.5 | 0.4 |
| Fliessgrenze (60°C)[Pa] | <10 | <10 | <10 | 60 | 136 | 55 | <10 |
| Auswaschbeständigkeit | n.OK | n.OK | n.OK | OK | OK | OK | n.OK |

| | | | | | | | |
|---|---|---|---|---|---|---|---|
| ¹GT = Gewichtsteile, ²D.E.R.^{™} 671, Dow, Epoxidfestharz, ³Dicyandiamid ⁴Substituierter Harnstoffbeschleuniger, ⁵Degussa, pyrogene Kieselsäure, ⁶Kuraray Specialities, Polyvinylbutyral, ⁷Zeon Europe, bzw. Ganz Chemical Co. Ltd. Japan, Acryl-Core-Shell Polymer, ⁸Lehmann & Voss & Co, Polyamid, ⁹Kusumoto Chemicals Ltd., Polyamidwachs. | | | | | | | |

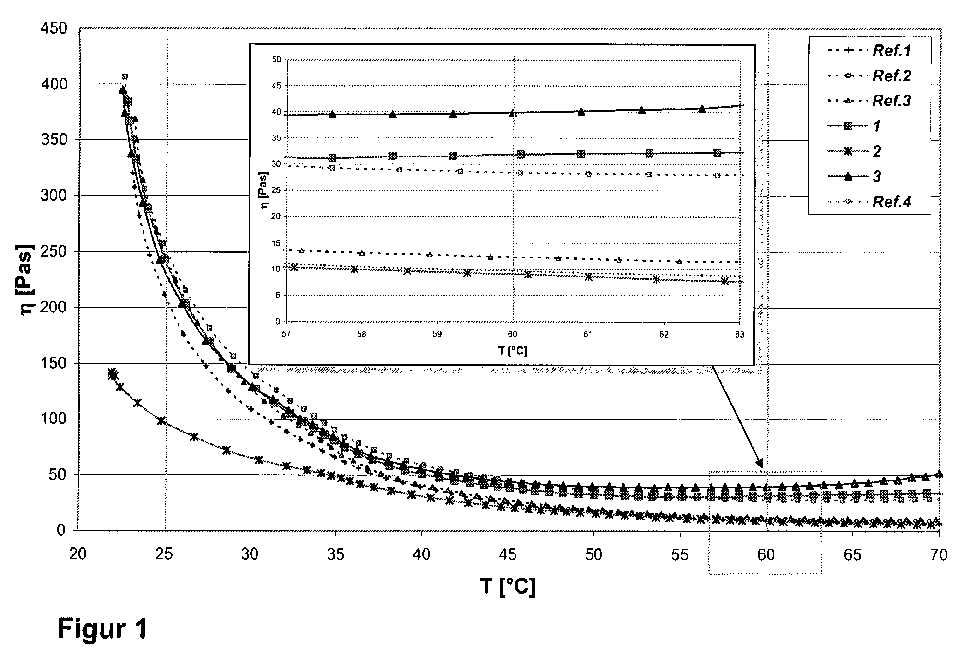

In Figur 1 sind die gemessenen Viskositätskurven (η versus Temperatur) vor der Erhitzung bei 125°C im Detail abgebildet. Zwecks besserer Visualisierung ist eine Vergrösserung des Bereiches zwischen 57 und 63 °C als Insert in Figur 1 eingefügt. Die Werte für ***Ref.4*** sind aufgrund der hohen Werte bei den gewählten Achsen auf der hier gewählten Darstellung in Figur 1 (vgl. η_{25 und} η₆₀ in Tabelle 1) nicht mehr sichtbar.

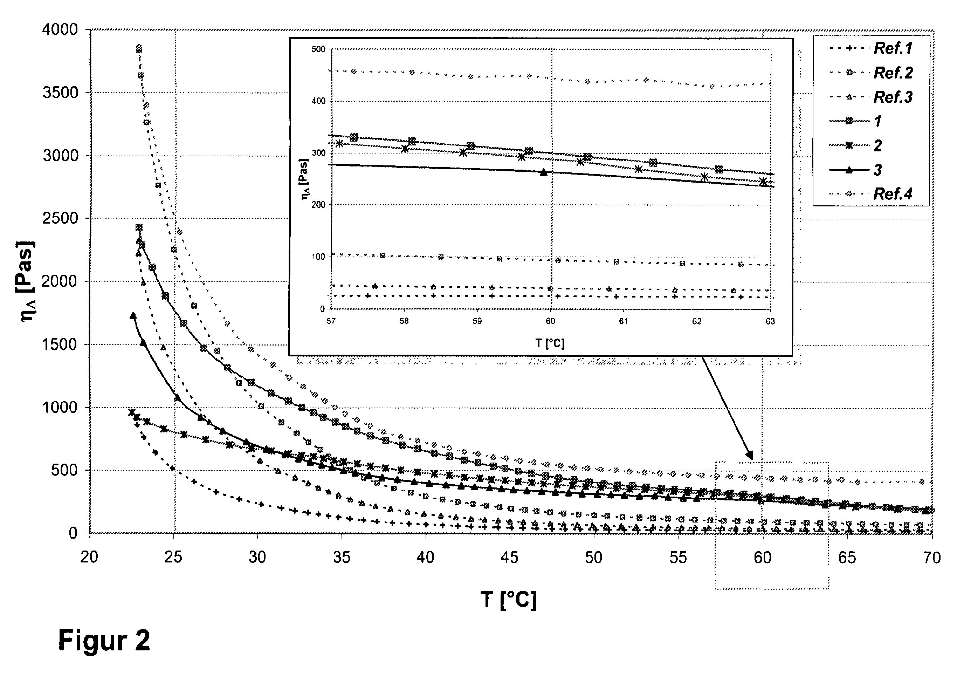

In Figur 2 sind die gemessenen Viskositätskurven (η_{Δ} versus Temperatur) nach einer 12 minütigen Erhitzung bei 125°C im Detail abgebildet. Zwecks besserer Visualisierung ist eine Vergrösserung des Bereiches zwischen 57 und 63 °C als Insert in Figur 2 eingefügt.

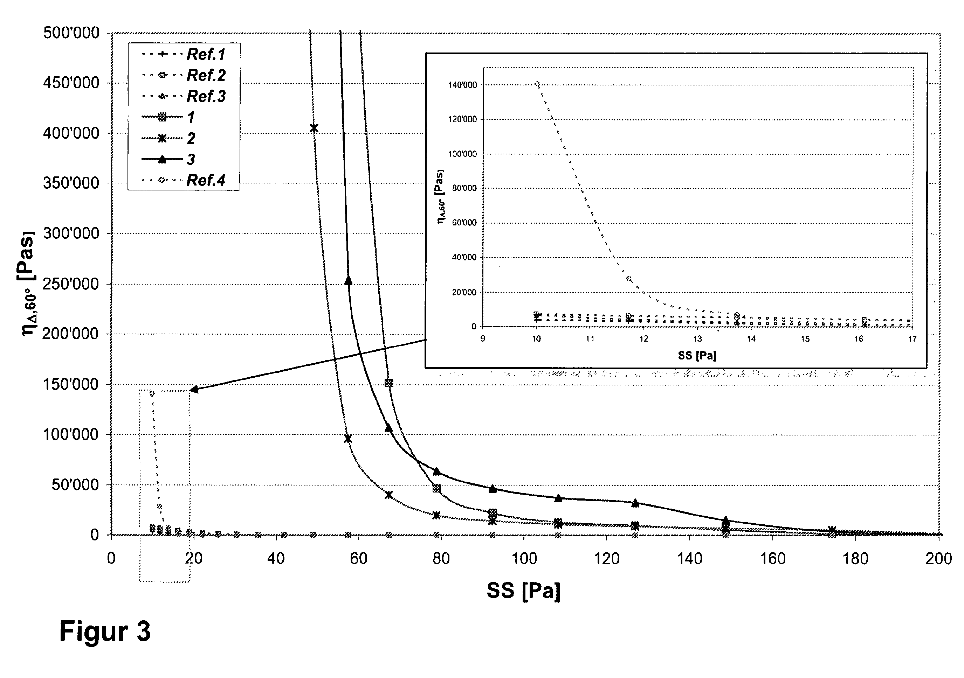

In Figur 3 sind die gemessenen Kurven für die Bestimmung der Fliessgrenze (Viskosität η_{Δ, 60°} versus Schubspannung ("SS")) nach einer 12 minütigen Erhitzung bei 125°C im Detail abgebildet. Zwecks besserer Visualisierung ist eine Vergrösserung des Bereiches zwischen 17 und 9 Pa Schubspannung als Insert in Figur 3 eingefügt.

## Patentansprüche

1. Einkomponentige hitzehärtende Epoxidharzzusammensetzung enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein Amid **AM** mit einem Schmelzpunkt von 100°C bis 145°C, wobei das Amid **AM** ein Fettsäureamid oder ein Polyamid ist.

2. Einkomponentige hitzehärtende Epoxidharzzusammensetzung gemäss Anspruch 1, **dadurch gekennzeichnet, dass** das Amid **AM** einen Schmelzpunkt von 120°C bis 130 °C aufweist.

3. Einkomponentige hitzehärtende Epoxidharzzusammensetzung gemäss Anspruch 1 oder 2, **dadurch gekennzeichnet, dass** die Epoxidharzzusammensetzung mindestens einen Zähigkeitsverbesserer **D** enthält.

4. Einkomponentige hitzehärtende Epoxidharzzusammensetzung gemäss einem der vorhergehenden Ansprüche, **dadurch gekennzeichnet, dass** der Zähigkeitsverbesserer **D** ausgewählt ist aus der Gruppe bestehend aus blockierten Polyurethanpolymeren, Flüssigkautschuken, Epoxidharzmodifizierten Flüssigkautschuken und Core-Shell-Polymeren.

5. Einkomponentige hitzehärtende Epoxidharzzusammensetzung gemäss Anspruch 4, **dadurch gekennzeichnet, dass** der Zähigkeitsverbesserer **D** ein Flüssigkautschuk ist, welcher ein Acrylonitil/Butadien-Copolymer ist, welches mit Carboxylgruppen oder (Meth)acrylatgruppen oder Epoxidgruppen terminiert ist, oder ein Derivat davon ist.

6. Einkomponentige hitzehärtende Epoxidharzzusammensetzung gemäss Anspruch 4 oder 5, **dadurch gekennzeichnet, dass** der Zähigkeitsverbesserer **D** ein blockiertes Polyurethanpolymer der Formel (I) ist 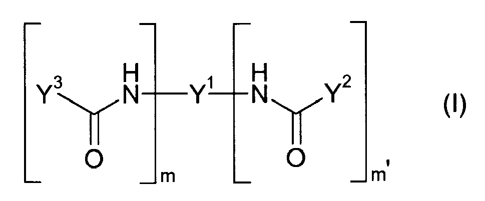 wobei
Y¹ für ein mit m+m' Isocyanatgruppen terminiertes lineares oder verzweigtes Polyurethanpolymer **PU1** nach dem Entfernen aller endständigen Isocyanatgruppen steht;
Y² unabhängig von einander für eine Blockierungsgruppe, welche sich bei einer Temperatur über 100°C abspaltet, steht;
Y³ unabhängig von einander für eine Gruppe der Formel (I') steht 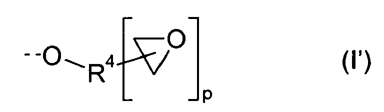 wobei R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 und
m und m' je für Werte zwischen 0 und 8 stehen, mit der Massgabe, dass m +m' für einen Wert von 2 bis 8 steht.

7. Einkomponentige hitzehärtende Epoxidharzzusammensetzung gemäss Anspruch 6, **dadurch gekennzeichnet, dass** Y² für einen Rest steht, welcher ausgewählt ist aus der Gruppe bestehend aus 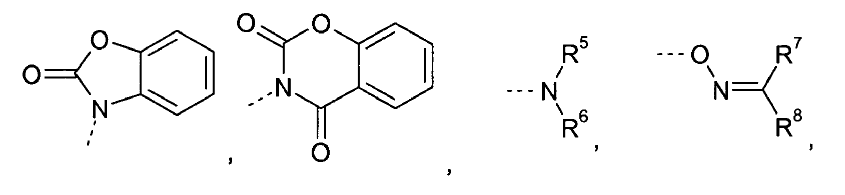 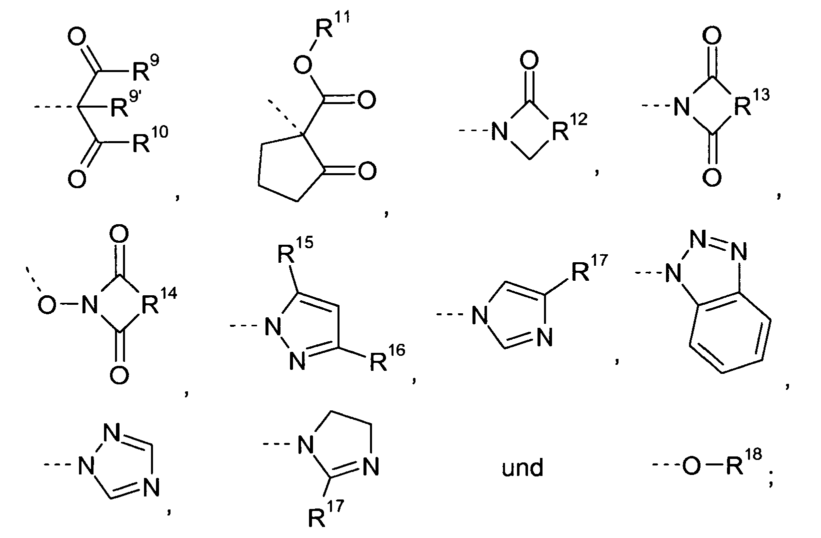 wobei
R⁵, R⁶, R⁷ und R⁸ je unabhängig voneinander für eine Alkyl- oder Cycloalkyl- oder Aryl- oder Aralkyl- oder Arylalkyl-Gruppe steht oder R⁵ zusammen mit R⁶, oder R⁷ zusammen mit R⁸, einen Teil eines 4- bis 7- gliedrigen Rings bilden, welcher allenfalls substituiert ist;
R⁹, R^{9'} und R¹⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist.

8. Einkomponentige hitzehärtende Epoxidharzzusammensetzung gemäss Anspruch 6 oder 7, **dadurch gekennzeichnet, dass** m verschieden von 0 ist.

9. Einkomponentige hitzehärtende Epoxidharzzusammensetzung gemäss einem der vorhergehenden Ansprüche, **dadurch gekennzeichnet, dass** die Gewichtsanteil aller Amide **AM** in der Zusammensetzung 0.1 - 5.0 Gew.-%, insbesondere 0.2 - 4.0 Gew.-%, bevorzugt 0.5 - 3.0 Gew.-%, ist.

10. Einkomponentige hitzehärtende Epoxidharzzusammensetzung gemäss einem der vorhergehenden Ansprüche, **dadurch gekennzeichnet, dass** die einkomponentige hitzehärtende Epoxidharzzusammensetzung bei 25°C eine Viskosität von weniger als 1000 Pas, insbesondere zwischen 5 und 900 Pas, bevorzugt zwischen 150 und 800 Pas, aufweist,
wobei die Viskosität auf einem Rheometer CVO 120 HR, Firma Bohlin mittels oszillographischen Messung mit Spalt: 1000 µm, Platte/Platte, Plattendurchmesser: 25 mm, Frequenz: 5 Hz, Solldeformation: 0.01 in einem Temperaturbereich von 23 - 70°C und einer Aufheizrate von 10°C/min gemessen wurde.

11. Verfahren zur Verklebung von hitzestabilen Substraten umfassend die Schritte
i) Applizieren einer einkomponentigen hitzehärtenden Epoxidharzzusammensetzung gemäss einem der Ansprüche 1 bis 10 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates S2, insbesondere eines Metalls;
iii) Erhitzen des Epoxidharzzusammensetzung auf eine Temperatur von 100 bis 130 °C, bevorzugt von 115 bis 125°C;
iv) In Kontaktbringen der Substrate **S1** und **S2** und der damit in Kontakt stehenden hitzehärtenden Epoxidharzzusammensetzung mit einer Waschflüssigkeit bei einer Temperatur zwischen 20 und 100°C, insbesondere zwischen 40 und 70°C; bevorzugt zwischen 50 und 70°C
v) Erhitzen der Zusammensetzung auf eine Temperatur von 140 - 220 °C, insbesondere von 140 - 200°C, bevorzugt zwischen 160 und 190°C;
wobei das Substrat **S2** aus dem gleichen oder einem unterschiedlichen Material wie das Substrat **S1** besteht.

12. Verfahren gemäss Anspruch 11, **dadurch gekennzeichnet, dass** das Substrat **S1** und/oder das Substrat **S2** ein Metall ist, welches vor dem Schritt i) durch eine kathodische Tauchlackierung (KTL) beschichtet worden ist.

13. Verwendung einer einkomponentigen hitzehärtenden Epoxidharzzusammensetzung gemäss einem der Ansprüche 1 bis 10 als hitzehärtender einkomponentiger Rohbauklebstoff im Fahrzeugbau.

14. Verklebter Artikel, insbesondere ein Fahrzeug oder ein Teil eines Fahrzeuges, welches durch ein Verfahren gemäss Anspruch 11 oder 12 erhalten wurde.

15. Verwendung eines Amides **AM,** wie es in der Zusammensetzung gemäss einem der Ansprüche 1 bis 10 beschrieben ist, zur Erhöhung der Auswaschbeständigkeit eines Rohbauklebstoffes im Fahrzeugbau.

## Claims

1. One-component heat-curing epoxy resin composition comprising
- at least one epoxy resin **A** with more than one epoxy group per molecule on the average;
- at least one curing agent **B** for epoxy resins, which is activated by elevated temperature;
- at least one amide **AM** with melting point from 100°C to 145°C, where the amide AM is a fatty acid amide or a polyamide.

2. One-component heat-curing epoxy resin composition as in Claim 1, wherein the amide **AM** has a melting point from 120°C to 130°C.

3. One-component heat-curing epoxy resin composition as in Claim 1 or Claim 2, wherein the epoxy resin composition comprises at least one toughener **D.**

4. One-component heat-curing epoxy resin composition as in any one of the preceding claims, wherein the toughener **D** is selected from the group consisting of blocked polyurethane polymers, liquid rubbers, epoxy resin-modified liquid rubbers, and core/shell polymers.

5. One-component heat-curing epoxy resin composition as in Claim 4, wherein the toughener **D** is a liquid rubber which is an acrylonitrile/butadiene copolymer, which is terminated by carboxyl groups or (meth)acrylate groups or epoxy groups, or is a derivative thereof.

6. One-component heat-curing epoxy resin composition as in Claim 4 or Claim 5, wherein the toughener **D** is a blocked polyurethane polymer of formula (I): 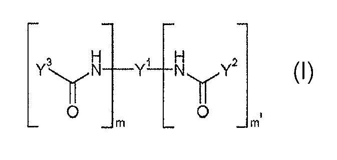 wherein
Y¹ stands for a linear or branched polyurethane polymer **PU1** terminated by *m*+*m*' isocyanate groups, after removal of all terminal isocyanate groups.
Y² each independently stands for a blocking group which is cleaved at a temperature above 100°C;
Y³ each independently stands for a group of formula (I'): 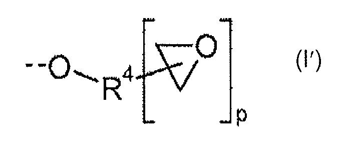 wherein R⁴ stands for an aliphatic, cycloaliphatic, aromatic, or araliphatic epoxy radical containing a primary or secondary hydroxyl group, after removal of the hydroxy and epoxy groups;
*p =* 1,2, or 3, and
*m* and *m'* each stand for numbers between 0 and 8, provided that *m*+*m*' stands for a number from 2 to 8.

7. One-component heat-curing epoxy resin composition as in Claim 6, wherein Y² stands for a radical selected from the group consisting of 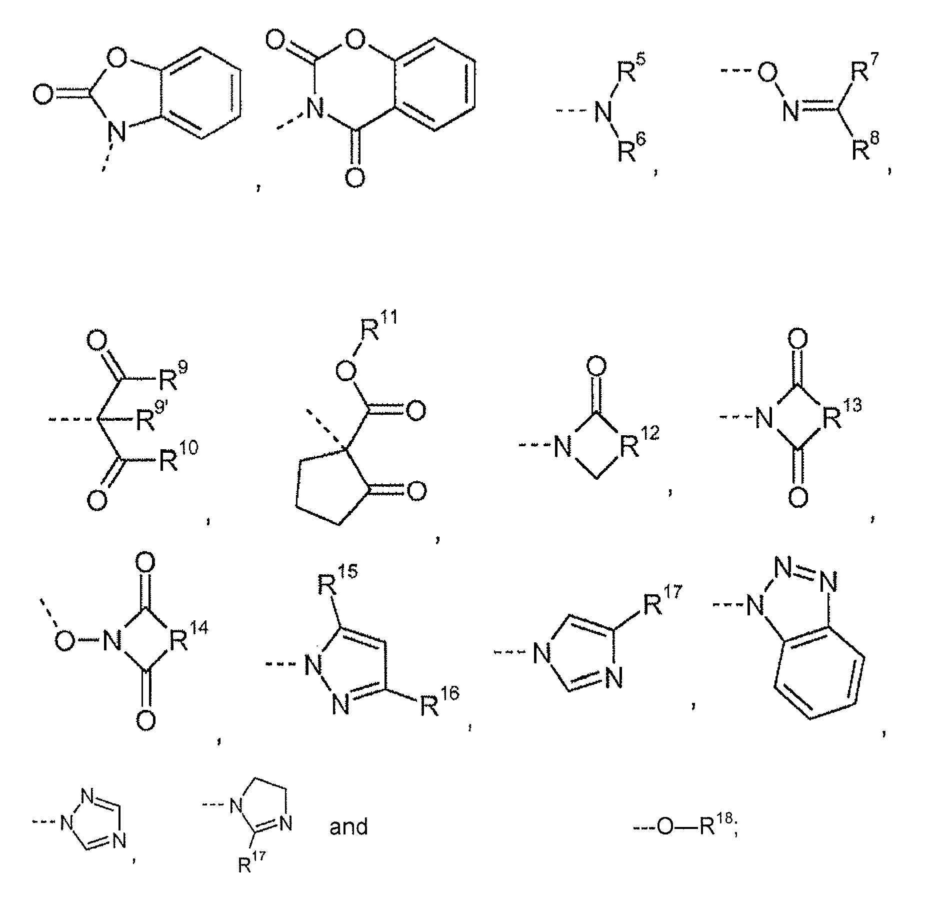 wherein
R⁵, R⁶, R⁷ and R⁸ each independently stands for an alkyl or cycloalkyl or aryl or aralkyl or arylalkyl group
or R⁵ together with R⁶ or R⁷ together with R⁸ form a part of a 4- to 7- membered ring, which is substituted if needed;
R⁹, R^{9'}, and R¹⁰ each independently stands for an alkyl or aralkyl or aryl or arylalkyl group or for an alkyloxy or aryloxy or aralkyloxy group;
R¹¹ stands for an alkyl group;
R¹², R¹³, and R¹⁴ each independently stand for an alkylene group with 2 to 5 C atoms, which optionally has double bonds or is substituted, or for a phenylene group or for a hydrogenated phenylene group;
R¹⁵, R¹⁶, and R¹⁷ each independently stand for H or for an alkyl group or for an aryl group or an aralkyl group; and
R¹⁸ stands for an aralkyl group or for a mononuclear or polynuclear substituted or unsubstituted aromatic group, which optionally has aromatic hydroxyl groups.

8. One-component heat-curing epoxy resin composition as in Claim 6 or Claim 7, wherein *m* is different from 0.

9. One-component heat-curing epoxy resin composition as in any one of the preceding claims, wherein the proportion by weight of all amides **AM** in the composition is 0.1-5.0 wt.%, in particular 0.2-4.0 wt.%, preferably 0.5-3.0 wt.%.

10. One-component heat-curing epoxy resin composition as in any one of the preceding claims, wherein the one-component heat-curing epoxy resin composition has a viscosity at 25°C below 1000 Pa·s, in particular between 5 and 900 Pa·s, preferably between 150 and 800 Pa·s.

11. Method for bonding heat-stable substrates, including the steps:
i) Application of a one-component heat-curing epoxy resin composition as in any one of Claims 1 to 10 to the surface of a heat-stable substrate **S1,** in particular a metal;
ii) Bringing the applied heat-curing epoxy resin composition into contact with the surface of another heat-stable substrate **S2,** in particular a metal;
iii) Heating the epoxy resin composition to a temperature of 100°C to 130°C, preferably 115°C to 125°C.
iv) Bringing substrates **S1** and **S2,** and the heat-curing epoxy resin composition in contact with them, into contact with a wash liquid at a temperature between 20°C and 100°C, in particular between 40°C and 70°C; preferably between 50°C and 70°C;
v) Heating the composition to a temperature of 140°C-220°C, in particular 140°-200°C, preferably between 160°C and 190°C;
wherein substrate **S2** consists of material which is the same as or different from substrate **S1.**

12. Method as in Claim 11, wherein substrate **S1** and/or substrate **S2** is a metal which has been coated by cathodic dip coating (CDC) before step i).

13. Use of a one-component heat-curing epoxy resin composition as in any one of Claims 1 to 10 as a heat-curing one-component bodyshell adhesive in automotive assembly.

14. Bonded article, in particular a vehicle or part of a vehicle, which has been obtained by means of a method as in Claim 11 or Claim 12.

15. Use of an amide **AM,** as described in the composition as in any one of Claims 1 to 10, to improve the wash resistance of a bodyshell adhesive in automotive assembly.

## Revendications

1. Composition de résine époxy thermodurcissable monocomposant, contenant
- au moins une résine époxy **A** comportant en moyenne plus d'un groupe époxy par molécule ;
- au moins un durcisseur **B** pour résines époxy, qui est activé par une température élevée ;
- au moins un amide **AM** ayant un point de fusion de 100 °C à 145 °C, l'amide **AM** étant un amide d'acide gras ou un polyamide.

2. Composition de résine époxy thermodurcissable monocomposant selon la revendication 1, **caractérisée en ce que** l'amide **AM** présente un point de fusion de 120 °C à 130 °C.

3. Composition de résine époxy thermodurcissable monocomposant selon la revendication 1 ou 2, **caractérisée en ce que** la composition de résine époxy contient au moins un agent améliorant la ténacité **D.**

4. Composition de résine époxy thermodurcissable monocomposant selon l'une quelconque des revendications précédentes, **caractérisée en ce que** l'agent améliorant la ténacité **D** est choisi dans le groupe constitué par les polymères polyuréthanne bloqués, les caoutchoucs liquides, les caoutchoucs liquides modifiés par des résines époxy et les polymères à noyau-enveloppe.

5. Composition de résine époxy thermodurcissable monocomposant selon la revendication 4, **caractérisée en ce que** l'agent améliorant la ténacité **D** est un caoutchouc liquide qui est un copolymère acrylonitrile/butadiène qui est terminé par des groupes carboxy ou (méth)acrylate ou des groupes époxy, ou est un dérivé de celui-ci.

6. Composition de résine époxy thermodurcissable monocomposant selon la revendication 4 ou 5, **caractérisée en ce que** l'agent améliorant la ténacité **D** est un polymère polyuréthanne bloqué de formule (I) 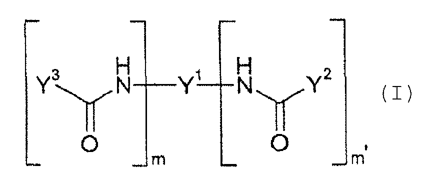 dans laquelle
Y¹ représente un polymère polyuréthanne **PU1** linéaire ou ramifié, terminé par m + m' groupes isocyanate, après l'élimination de tous les groupes isocyanate en bout de chaîne ;
Y² représente, chaque fois indépendamment, un groupe bloquant qui se sépare à une température de plus de 100 °C ;
Y³ représente, chaque fois indépendamment, un groupe de formule (I') 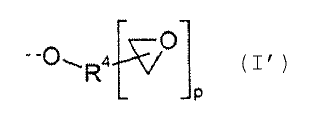 dans laquelle R⁴ représente un reste d'un époxyde aliphatique, cycloaliphatique, aromatique ou araliphatique contenant un groupe hydroxy primaire ou secondaire, après l'élimination des groupes hydroxy et époxy ;
p = 1, 2 ou 3 et
m et m' représentent des valeurs comprises entre 0 et 8, étant entendu que la somme m+m' a une valeur de 2 à 8.

7. Composition de résine époxy thermodurcissable monocomposant selon la revendication 6, **caractérisée en ce que** Y² représente un radical qui est choisi dans l'ensemble constitué par 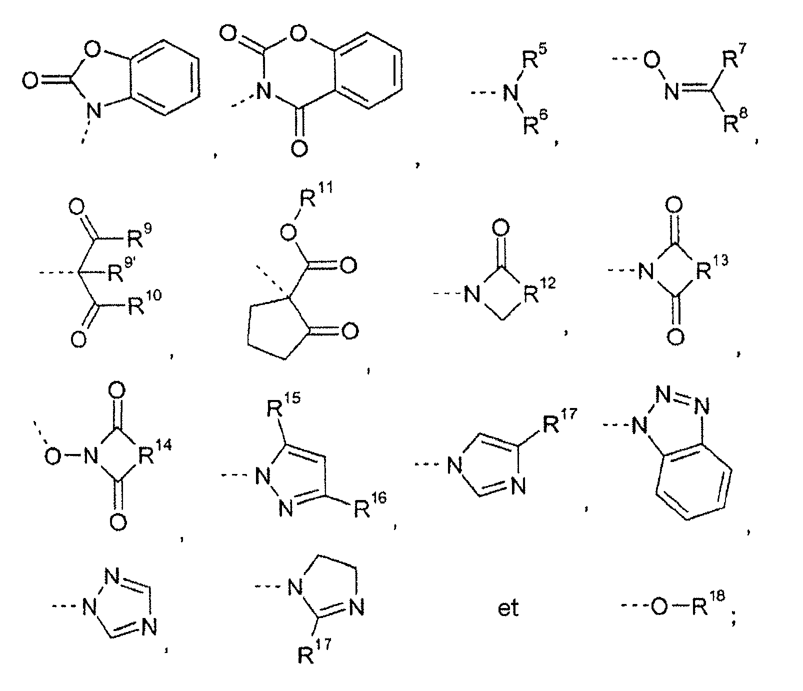 où
R⁵, R⁶, R⁷ et R⁸ représentent chacun, indépendamment les uns des autres, un groupe alkyle ou cycloalkyle ou aryle ou aralkyle ou arylalkyle
ou R⁵ conjointement avec R⁶, ou R⁷ conjointement avec R⁸ forment une partie d'un cycle à 4-7 chaînons qui est éventuellement substitué ;
R⁹, R^{9'} et R¹⁰ représentent, chacun indépendamment, un groupe alkyle ou aralkyle ou aryle ou arylalkyle ou représentent un groupe alkyloxy ou aryloxy ou aralkyloxy ;
R¹¹ représente un groupe alkyle ;
R¹², R¹³ et R¹⁴ représentent, chacun indépendamment, un groupe alkylène ayant de 2 à 5 atomes de carbone, qui comporte éventuellement des doubles liaisons ou est substitué, ou représentent un groupe phénylène ou un groupe phénylène hydrogéné ;
R¹⁵, R¹⁶ et R¹⁷ représentent, chacun indépendamment, H ou un groupe alkyle ou un groupe aryle ou un groupe aralkyle ; et
R¹⁸ représente un groupe aralkyle ou un groupe aromatique mono- ou polynucléaire, substitué ou non substitué, qui comporte éventuellement des groupes hydroxy aromatiques.

8. Composition de résine époxy thermodurcissable monocomposant selon la revendication 6 ou 7, **caractérisée en ce que** m est différent de 0.

9. Composition de résine époxy thermodurcissable monocomposant selon l'une quelconque des revendications précédentes, **caractérisée en ce que** la proportion en poids de tous les amides **AM** dans la composition vaut de 0,1 à 5,0 % en poids, en particulier de 0,2 à 4,0 % en poids, de préférence de 0,5 à 3,0 % en poids.

10. Composition de résine époxy thermodurcissable monocomposant selon l'une quelconque des revendications précédentes, **caractérisée en ce que** la composition de résine époxy thermodurcissable monocomposant présente à 25 °C une viscosité de moins de 1 000 Pa.s, en particulier comprise entre 5 et 900 Pa.s, de préférence entre 150 et 800 Pa.s,
la viscosité étant mesurée sur un rhéomètre CVO 120 HR, Société Bohlin, par mesure oscillographique avec un interstice : 1 000 µm, plateau/plateau, diamètre du plateau : 25 mm, fréquence : 5 Hz, solidification : 0,01 dans une plage de température de 23-70 °C et à une vitesse de chauffe de 10 °C/min.

11. Procédé pour le collage de supports thermostables, comprenant les étapes
i) application d'une composition de résine époxy thermodurcissable monocomposant selon l'une quelconque des revendications 1 à 10, sur la surface d'un support thermostable **S1,** en particulier d'un métal ;
ii) mise en contact de la composition de résine époxy thermodurcissable appliquée avec la surface d'un autre support thermostable **S2,** en particulier d'un métal ;
iii) chauffage de la composition de résine époxy jusqu'à une température de 100 à 130 °C, de préférence de 115 à 125 °C ;
iv) mise en contact des supports **S1** et **S2** et de la composition de résine époxy thermodurcissable en contact avec ceux-ci, avec un liquide de lavage à une température comprise entre 20 et 100 °C, en particulier entre 40 et 70 °C ; de préférence entre 50 et 70 °C ;
v) chauffage de la composition jusqu'à une température de 140-220 °C, en particulier de 140-200 °C, de préférence comprise entre 160 et 190 °C ;
le support **S2** étant constitué du même matériau que le support **S1** ou d'un matériau différent de celui-ci.

12. Procédé selon la revendication 11, **caractérisé en ce que** le support **S1** et/ou le support **S2** est/sont un métal qui, avant l'étape i), a été revêtu par un peinturage par électrodéposition cathodique (KTL).

13. Utilisation d'une composition de résine époxy thermodurcissable monocomposant selon l'une quelconque des revendications 1 à 10, en tant qu'adhésif pour structure brute dans la construction de véhicules.

14. Article collé, en particulier un véhicule ou une partie d'un véhicule, qui a été obtenu par un procédé selon la revendication 11 ou 12.

15. Utilisation d'un amide **AM,** tel qu'il est décrit dans la composition selon l'une quelconque des revendications 1 à 10, pour accroître la résistance à l'élimination par lavage d'un adhésif pour structure brute dans la construction de véhicules.
